(19) Europäisches Patentamt
European Patent Office
Office européen des brevets

(11) **EP 4 560 264 B1**

(12) **EUROPEAN PATENT SPECIFICATION**

(45) Date of publication and mention
of the grant of the patent:
**13.05.2026  Bulletin 2026/20**

(51) International Patent Classification (IPC):
***G01C 21/20*** *(2006.01)*        ***G08G 3/02*** *(2006.01)*

(21) Application number: **23211996.6**

(52) Cooperative Patent Classification (CPC):
**G01C 21/203; G08G 3/02**

(22) Date of filing: **24.11.2023**

(54) **NAVIGATION PLANNING SYSTEM AND NAVIGATION PLANNING METHOD**

NAVIGATIONSPLANUNGSSYSTEM UND NAVIGATIONSPLANUNGSVERFAHREN

SYSTÈME ET PROCÉDÉ DE PLANIFICATION DE NAVIGATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.05.2025  Bulletin 2025/22**

(73) Proprietor: **Furuno Electric Co., Ltd.
Hyogo 662-8580 (JP)**

(72) Inventor: **UOSHITA, Seiichi
Nishinomiya-City, 662-8580 (JP)**

(74) Representative: **Müller Hoffmann & Partner
Patentanwälte mbB
St.-Martin-Straße 58
81541 München (DE)**

(56) References cited:
**WO-A1-2021/149448**

## Description

### TECHNICAL FIELD

The present invention relates primarily to a vessel navigation system and method for safely navigating a vessel, and more specifically, to a navigation planning system and a route planning method for safely navigating a vessel by avoiding collision with a plurality of obstacles around an own vessel.

### BACKGROUND

In general, a vessel or other movable body establishes a planned route for a voyage from a departure point to a destination before beginning the navigation. Currently, movable bodies such as vessels may have navigation systems and devices for generating planned routes and monitoring planned routes in order to safely move movable bodies.

In these conventional navigation planning systems, movable bodies such as own vessels acquire movable body information and obstacle information using a plurality of sensor units in order to detect, identify, and track their own positions and the positions of nearby obstacles and other vessels on the planned route in order to avoid collisions with other obstacles such as other vessels.

Patent document 1: US2020/0310434 A1. WO 2021/ 149 448 A1 teaches to provide a vessel monitoring device that allows a user to intuitively and easily recognize information on the possibility of a collision. Such a vessel maneuvering support device comprises a risk map generation unit and a display data generation unit. When the position, which is on a planned course estimated for a second vessel and determined to evaluate the risk of a first vessel colliding with the second vessel, is called a risk evaluation position assuming veering of the first vessel among a plurality of vessels, the risk map generation unit estimates the possibility of collision between the first vessel and the second vessel at a position other than the risk evaluation position, and generates a risk map showing the distribution of the estimated possibility of a collision. The display data generation unit generates display data for displaying the risk map.

### SUMMARY

#### Problems to be solved by the Invention

While navigating the planned route, the planned route may have to be changed due to artificial factors such as the appearance of nearby obstacles or other vessels that may cross the planned route. In addition, the planned route may have to be changed due to natural factors such as sudden changes in ocean conditions, tides, or other disturbance factors.

For this reason, vessel operators must safely navigate movable bodies such as own vessels along the planned route, avoiding collisions with surrounding obstacles and other vessels, and may need assistance navigating ocean conditions and tides.

The problem to be solved by the present invention is to provide systems, devices, and methods that support vessel operators to safely navigate movable bodies by responding to the above requirements and avoiding collisions with multiple obstacles and other vessels.

#### Means and Effects of solving the problem

The above problem is solved by the subject-matter of the independent claims.

In the navigation planning system, the congestion risk calculator may calculate a congestion risk of a planned route and a congestion risk of an evasion route based on the logical sum of a plurality of collision risks.

Here, the collision risk calculator may calculate a maximum collision risk for each of one or a plurality of potential evasion routes, and a congestion risk calculator calculates a congestion risk for each of one or a plurality of potential evasion routes.

The collision risk calculator may calculate a maximum collision risk when a movable body navigates the potential evasion route for each of the potential evasion routes, and the evasion route selector may select a potential evasion route whose maximum collision risk is less than or equal to a predetermined threshold as the evasion route, and determine whether the maximum collision risk corresponding to the selected evasion route is less than the maximum collision risk for the planned route, and determine that navigation of the evasion route is necessary when the maximum collision risk is small.

Here, the congestion risk calculator may calculate the evasion route congestion risk in the case where the movable body navigates the selected evasion route, and the evasion route selector may further determine that the navigation of the selected evasion route is necessary when the evasion route congestion risk is smaller than the congestion risk for the planned route.

The evasion route selector may further determine the necessity of the evasion by taking into account the distance of each potential evasion route navigated by the movable body for each potential evasion route.

The evasion route selector may select the potential evasion route for which the distance navigated by the movable body is the minimum among potential evasion routes whose maximum collision risk and congestion risk are both equal to or less than a predetermined threshold.

In the navigation planning system of the present invention, obstacle information may include information detected by at least one of radar, lidar, sonar, or image sensors mounted on the movable body, information received by an automatic identification system receiver, information transmitted by another ship other than the movable body, or information detected by radio communication at a location other than the movable body. The obstacle information may also include at least one of another ship, tidal current, weather, reef, or stranded ship.

The navigation planning system of the present invention may further include a display for displaying an evasion route along with a planned route on a display image. It may further include a route planning unit for providing one or more routes for navigation of a movable body from a port of departure to a destination, and one or a plurality of sensors for obtaining fault information. Furthermore, the congestion risk of the planned route may be calculated based on the logical sum of the plurality of collision risks excluding the maximum collision risk among the plurality of collision risks.

In the navigation planning system of the present invention, the maximum collision risk may be calculated for each of the potential evasion routes and the congestion risk may be calculated for each of the potential evasion routes.

The maximum collision risk when the movable body navigates the potential evasion route may be calculated for each of the potential evasion routes, the potential evasion route whose maximum collision risk is less than or equal to a predetermined threshold may be selected as the evasion route, the maximum collision risk corresponding to the selected evasion route may be determined to be less than the maximum collision risk for the planned route, and the navigation of the evasion route may be determined to be necessary when the maximum collision risk is less than the maximum collision risk for the planned route.

Among the potential evasion routes whose maximum collision risk and congestion risk are both less than or equal to the predetermined threshold, the potential evasion route whose distance navigated by the movable body may be minimized may be selected as the evasion route.

In this specification, the term "risk" such as "collision risk" and "congestion risk" is described, but the risk is quantified based on a predetermined rule and may be referred to as the degree of risk. The "collision risk" is calculated by quantifying the degree of likelihood of collision with an obstacle (e.g. vessel) that has a risk of collision according to a predetermined standard, and "congestion risk" is calculated by quantifying the degree of likelihood of collision with any of the plurality of obstacles when there are a plurality of obstacles that have a risk of collision according to a predetermined standard.

The planned route is not limited to all routes from the point of departure to the point of destination, and it may be a route of the planned route that is ahead of the current position of the movable body that has already sailed and is underway, or it may be a planned route that is ahead of the predicted position that it will pass in the future. In addition, an evasion route of the movable body may be generated instead of the planned route, and the above may be applied instead of the planned route.

The "Congestion risk" is a concept indicating the degree of simultaneous approach of obstacles included in the congestion risk obstacle based on the collision risk corresponding to each of the plurality of obstacles that may become congestion risk. As an example, the congestion risk of the planned route is calculated based on the plurality of collision risks ranging from zero, which indicates a state in which there is no congestion risk, to 1, in which the congestion risk is the same as the maximum collision risk, which indicates the maximum collision risk among the obstacles. Here, the range of the congestion risk is a number ranging from 0 to 1 but is not limited thereto.

Furthermore, the congestion risk of the evasion route is determined. The congestion risk calculator calculates the congestion risk of the planned route and the evasion route based on the plurality of collision risks excluding the maximum collision risk among the plurality of collision risks. As an example of the calculation of the congestion risk based on the plurality of collision risks excluding the maximum collision risk, the logical sum of the respective collision risks to be calculated is calculated, and this is designated as the congestion risk.

However, the calculation based on the logical sum is only an example, and it is not limited to the above example if it is possible to show the number according to the degree of simultaneous approach of obstacles, such as adding the number after multiplying by the higher coefficient in order of the collision risk, instead of simply using the logical sum.

As will be described in detail in the section of the form for implementing the invention, both the inclusion and the exclusion of the obstacle with the maximum risk as the object of the congestion risk calculation are meaningful and can be adopted.

To solve the problem that there is no way to display visual information intuitively available for a vessel operator to navigate safely by generating an evasion route ahead of the current position or the predicted position of a movable body when multiple obstacles are detected on a planned route.

The navigation planning system of the present invention enables a vessel operator to safely navigate a movable body such as an own vessel by avoiding collision with a plurality of surrounding obstacles such as a vessel to be an obstacle and a terrain on an evasion route displayed on a screen of a display part.

## BRIEF DESCRIPTION OF DRAWINGS

Embodiments illustrated for means to solve the problem will be better understood by reference to the drawings. Here, similar portions are designated by similar numerals throughout. The following description is intended solely as an implementation mobile and simply illustrates certain selected embodiments of systems, devices and methods consistent with the challenges claimed herein and the means for solving them.

FIG. 1 is a block diagram illustrating the configuration of a navigation planning system for safely navigating a movable body moving over water by operation such as an own vessel, in accordance with an embodiment of the navigation planning system of the present invention;

FIG. 2 is a diagram for the description of an embodiment showing a positional relationship between an own vessel and another vessel in an area surrounding the own vessel;

FIG. 3 is a diagram for the description of an embodiment showing a positional relationship between an own vessel and another vessel in an area surrounding the own vessel, wherein the own vessel is on a planned route but oriented in a direction inclined with respect to the course;

FIG. 4 is a block diagram showing a configuration of a navigation planning system for safely navigating a movable body moving on water by an own vessel or the like, according to another embodiment of the navigation planning system of the present invention;

FIG. 5 shows an example of a risk evaluator and its related configuration in an embodiment of the navigation planning system of the present invention;

FIG. 6 illustrates the determination of a collision risk associated with an obstacle along a planned route according to an embodiment of the navigation planning system of the present invention;

FIG. 7 shows a determination of a collision risk when an own vessel approaches an obstacle, according to an embodiment of the navigation planning system of the present invention;

FIG. 8 shows a relationship between the time until the own vessel and the obstacle are located at the nearest distance and the collision risk is shown for the purpose of the description of an embodiment;

FIG. 9 illustrates the determination of collision risk when an own vessel approaches an obstacle, according to another embodiment of the navigation planning system of the present invention;

FIG. 10 illustrates the determination of collision risk when an own vessel approaches an obstacle, according to yet another embodiment of the navigation planning system of the present invention;

FIG. 11 is a block diagram of a navigation planning system for safely navigating a movable body (or own vessel) according to another embodiment of the navigation planning system of the present invention;

FIG. 12 is a block diagram of a navigation planning system for safely navigating a movable body (or own vessel) according to yet another embodiment of the navigation planning system of the present invention;

FIG. 13 shows an example of the configuration of an evasion route setting module in the navigation planning system of the present invention;

FIG. 14 shows an example of generating a potential evasion route in the navigation planning system of the present invention;

FIG. 15 is a diagram showing an evasion route of an own vessel set when the own vessel (movable body) follows an evasion route, as shown for the purpose of explaining an embodiment;

FIG. 16 is a part of a flowchart showing a route planning method according to an embodiment of the present invention; and

FIG. 17 is a part of a flowchart following the flowchart shown in **FIG. 16.**

## DETAILED DESCRIPTION OF THE EMBODIMENTS

In the following detailed description, reference is made to the accompanying drawings, some of which are incorporated herein.

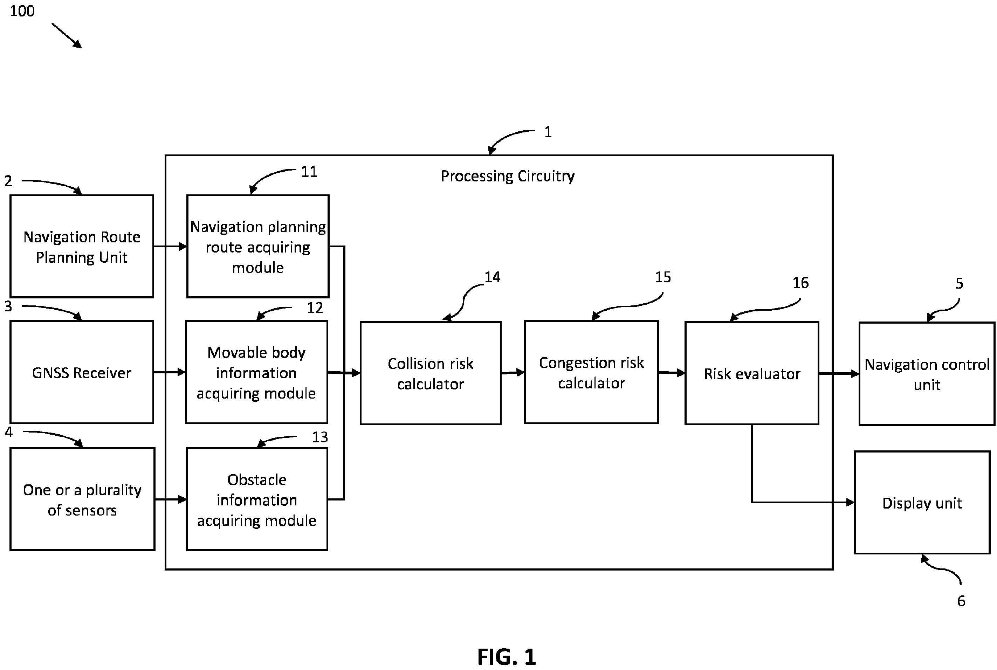

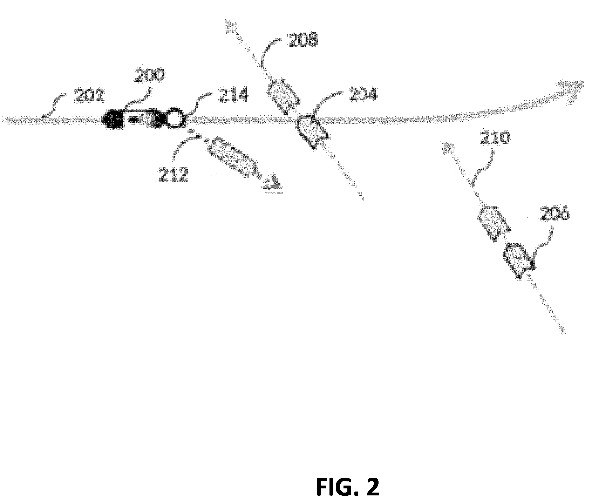

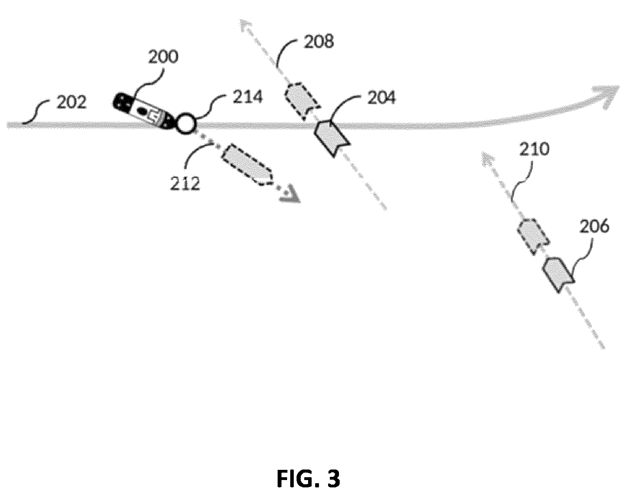

FIG. 1 is a block diagram showing a configuration of a navigation planning system **100** for safely navigating a movable body **200** according to an embodiment of the present invention. **FIGs. 2 and 3** illustrate a predetermined area surrounding an own vessel **200** according to an embodiment of the navigation planning system of the present invention. Hereinafter, the movable body **200** will also be referred to as the own vessel **200** as appropriate.

The navigation planning system **100** may be provided on the own vessel **200** itself to navigate the own vessel **200** from the departure point (port) to the destination. Once the voyage has commenced, the navigation planning system **100** monitors whether own vessel **200** is navigating properly along a planned route **202,** which is the route that the own vessel **200** should follow between the port of departure and the destination.

The navigation planning system **100** is used for the purpose of ensuring that the own vessel **200** can navigate safely, avoiding collisions with vessels identified as obstacles, adverse sea conditions, weather, and other obstacles around it. Vessel operators, *i.e.,* operators operating the own vessel **200,** may navigate the own vessel **200** along the planned route **202** with the assistance of the navigation planning system **100.**

As shown in **FIGs. 2 and 3**, in this embodiment, the planned route **202** is the route that the own vessel **200** should follow in order to navigate and safely reach its destination, and the planned route **202** shows the route of the own vessel **200** and the course direction from the current position of the own vessel **200.**

A navigation route planning unit **2** is configured to store multiple routes for the navigation of the own vessel **200.** In this embodiment, the vessel operator may operate various peripherals operatively connected to the navigation planning system **100** to perform various functions according to the functions of the navigation planning system. For example, the user can provide various instructions to the navigation planning system **100** regarding the location of the departure point and the destination of the navigation of the own vessel **200** by operating a peripheral device such as a keyboard or mouse.

The navigation route planning unit **2** may provide one or more routes for the navigation of the own vessel **200** from the departure point to the destination based on information such as the source location and the destination obtained from the user. In this embodiment, each route can include the date and time of the navigation, weather conditions, tidal conditions, and the like, and may be associated with this information.

The navigation route planning unit **2** receives user input from the vessel operator or an associated person for the selection of a route as planned route **202** for the navigation of the own vessel **200** from the location of the port of departure to the destination. In this embodiment, the vessel operator selects a route to travel, but as another embodiment, the optimal route may be selected based on the current weather conditions, travel time, tidal or tidal current conditions, and the like, at the discretion of the navigation route planning unit **2** itself.

The navigation planning system **100** utilizes information related to the movable body **200,** such as another vessel, and a plurality of obstacles **204, 206** in the area surrounding the own vessel **200** to safely navigate the own vessel **200** from its origin to its destination along the planned route **202.** A global navigation satellite system (GNSS) receiver **3,** typically mounted on the own vessel **200,** acquires movable body information, such as a location, a direction of travel, and a speed of the own vessel **200.** The GNSS receiver **3** receives a satellite signal and accurately acquires the movable body information related to the own vessel **200.**

One or a plurality of sensors **4** acquires obstacle information including a position, a direction of movement, and a speed of a plurality of obstacles **204** and **206** that may prevent navigation of the own vessel **200.** The one or the plurality of sensors **4** may correspond to one or more navigation electronic devices. A specific configuration of the one or the plurality of sensors **4** is a device having a detection or sensing function such as a radio detection and ranging (RADAR) device, a light detection and ranging (LIDAR) device, an acoustic navigation and ranging (SONAR) device, an automatic identification system (AIS) receiver, and an image sensor such as a camera or video recorder mounted on the own vessel **200.** The one or the plurality of sensors **4** may detect an obstacle of navigation of the own vessel **200,** not only the above, but also information transmitted from another ship, a land management station or the like.

In this embodiment, the obstacle information includes information detected by any or at least one of radar, LIDAR device, SONAR device, and image sensor, information acquired by an AIS receiver, information transmitted from other vessels, and information acquired by detecting radio communication at a place other than the own vessel **200.**

In this embodiment, for ease of understanding, there are only 2 obstacles **204** and **206** along the planned route **202,** but the number of obstacles is not limited to only two and may be greater. In various other embodiments, the plurality of obstacles that are planned or threatened to traverse or approach the planned route **202** may include any number of obstacles greater than or equal to two without departing from the scope of the present invention.

In this embodiment, the obstacle information further includes information about other movable bodies, including at least one of other vessels, currents, weather, reefs, and stranded vessels. Information about other movable bodies may be obtained in a manner similar to obtaining information about the multiple obstacles **204** and **206.**

As shown in **FIG. 1,** the navigation planning system **100** includes processing circuitry **1** including a navigation planning route acquiring module **11,** a movable body information acquiring module **12,** an obstacle information acquiring module **13,** a collision risk calculator **14,** a congestion risk calculator **15,** and a risk evaluator **16.** Herein, in addition to **FIG. 1, FIGs. 2 and 3** will be described with appropriate reference.

The navigation planning route acquiring module **11** receives the planned route selected by the vessel operator as the planned route **202** and is operable and communicatively connected to the navigation route planning unit **2.** The movable body information acquiring module **12** is operable and communicatively connected to the GNSS receiver **3** to receive the movable body information associated with the own vessel **200.** In addition, the movable body information acquiring module **12** is configured to store the movable body information received.

The obstacle information acquiring module **13** is operatively connected and able to communicate with the one or the plurality of sensors **4** to receive obstacle information related to the plurality of obstacles **204** and **206.** The obstacle information acquiring module **13** is configured to receive obstacle information including the position, the moving direction, and a speed of each of the obstacles **204** and **206** traversing the planned route traversed by the own vessel **200** or approaching the planned route detected by the one or the plurality of sensors **4.** In this embodiment, the planned route is the planned route **202** that the own vessel **200** plans to navigate. The obstacle information acquiring module **13** is further configured to store the above obstacle information.

In this embodiment, the movable body information acquiring module **12** periodically acquires movable body information of the own vessel **200,** and the obstacle information acquiring module **13** periodically acquires obstacle information of the plurality of obstacles **204** and **206.**

The collision risk calculator **14** is operatively connected to the navigation planning route acquiring module **11,** the movable body information acquiring module **12,** and the obstacle information acquiring module **13,** and can communicate with each of them. The collision risk calculator **14** receives the movable body information of the planned route **202,** the own vessel **200,** and the obstacle information of the plurality of obstacles **204, 206** as the route to be navigated, and calculates the risk obtained by quantifying the risk of collision with the own vessel **200.** The calculation of concrete collision risk and congestion risk will be described later.

The collision risk calculator **14** is further configured to calculate a plurality of collision risks for the plurality of obstacles **204** and **206** expected to be on the planned route **202** based on movable body information and obstacle information. The plurality of collision risks may be calculated from the positions, the moving directions, and the speeds of the own vessel **200** and the plurality of obstacles **204** and **206.** The plurality of collision risks indicates a risk of collision between own vessel **200** and the plurality of obstacles **204, 206.**

In this embodiment, when the obstacle **204** and the obstacle **206** are traveling along the projected future routes **208** and **210,** respectively, and the own vessel **200** continues to travel along the planned route, the projected future routes **208** and **210** and the planned route of own vessel **200** may interfere and collide at points as shown in the figure.

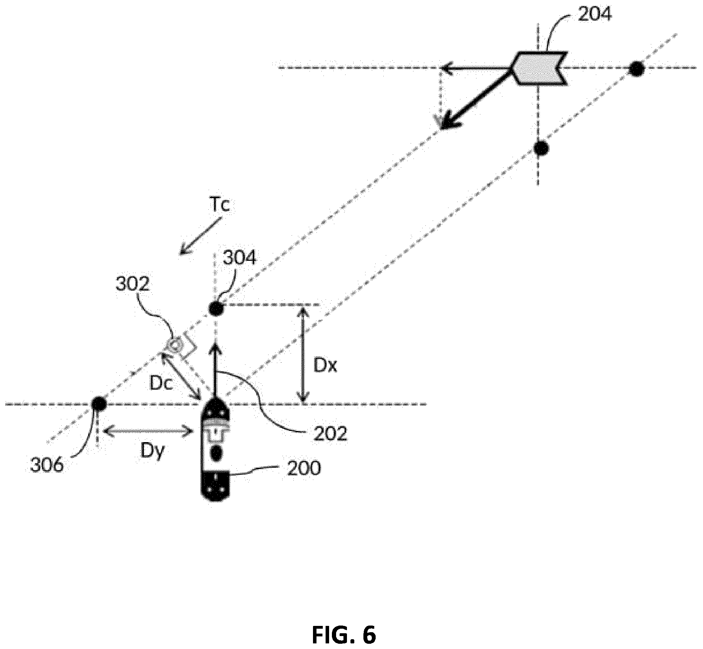

As shown in **FIGs. 2 and 3,** the multiple collision risk associated with the planned route is high, and the collision risk between own vessel **200** and the multiple obstacles **204** and **206** is high. The determination of the collision risk associated with obstacle **204** will be described in detail later with reference to **FIGs. 6 to 10.**

Referring to **FIG. 1,** the congestion risk calculator **15** is operatively connected to the collision risk calculator **14** and is configured to communicate with the collision risk calculator **14** to receive the plurality of collision risks associated with the plurality of obstacles **204** and **206** along the planned route **202.** Further, here, the congestion risk calculator **15** is configured to determine a congestion risk associated with the planned route **202** along the current route direction based on the plurality of collision risks. The congestion risk indicates the degree of simultaneous approach of the obstacles included in the congestion risk obstacle based on the collision risk corresponding to each of the obstacles included in the risk obstacle in the congestion region.

As an example of the calculation corresponding to the plurality of obstacles **204** and **206,** the congestion risk calculator **15** determines the congestion risk corresponding to the planned route 202 based on the logical sum of the plurality of collision risks. In this embodiment, the congestion risk calculator **15** determines the congestion risk of the planned route **202** based on a logical sum of the plurality of collision risks excluding the maximum collision risk among the plurality of collision risks.

The term "logical sum" here refers to a logical sum based on the logic that is true when one or both of two propositions in a logical operation are true and false when both are false, that is, the logical sum based on the number of logic circuits and binary digits is 1 when one or both of the two inputs are 1, and 0 when both are 0. For example, if there are 4 obstacles: Obs (1), Obs (2), Obs (3), and Obs (4), and the collision risks are 0.3, 0.5, 0.7, and 0.9, respectively, the maximum collision risk is 0.9 of Obs (4), and the logical sum of 3 Obs (1) to Obs (3) excluding them is 0.7.

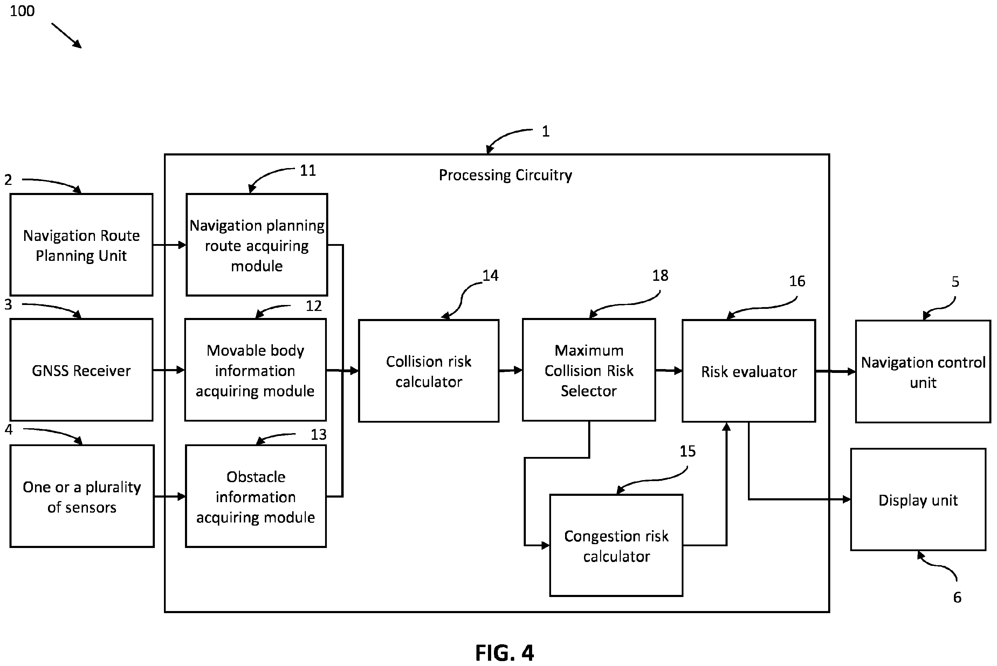

**FIG. 4** is a block diagram showing a configuration of the navigation planning system **100** for safely navigating a movable body moving on water by an operation such as an own vessel according to another embodiment of the navigation planning system of the present invention. The difference from **FIG. 1** is that the embodiment shown in **FIG. 4** includes a maximum collision risk selector **18.**

The maximum collision risk selector **18** selects an obstacle having the maximum collision risk, *i.e.,* the obstacle having the highest collision risk, among the collision risks for each of the plurality of obstacles calculated by the collision risk calculator **14.** In this embodiment, as described above, the possibility of collision must be evaluated first for the obstacle having the maximum collision risk, and avoidance action must be taken as necessary.

On the other hand, for the obstacle other than the obstacle having the maximum collision risk, the collision risk caused by the degree of simultaneous approach, *i.e.,* congestion risk, is evaluated. In order to do this, for the set of one or a plurality of obstacles having a collision risk other than the maximum collision risk or the plurality of the obstacles, the collision risk is input by the congestion risk calculator **15,** and the congestion risk is calculated.

In this embodiment, since the collision risk with the obstacles having the maximum collision risk is evaluated individually, it may be omitted but included. When the congestion risk is calculated excluding the obstacles having the maximum collision risk, it is more appropriate to calculate the congestion risk by including the obstacles having the sub-maximum risk following the maximum risk.

In evaluating the collision risk, it is better to calculate the congestion risk based on the respective collision risks of one or more other obstacles excluding the obstacles having the maximum collision risk, and evaluate the maximum collision risk and the congestion collision risk separately. The first priority should be to avoid collisions with obstacles having maximum collision risk. The second priority should be to consider other collision risks when performing collision avoidance, for example, collision risks with obstacles including obstacles having second large collision risk with higher collision risk. However, the maximum collision risk may be included in the calculation of the congestion risk.

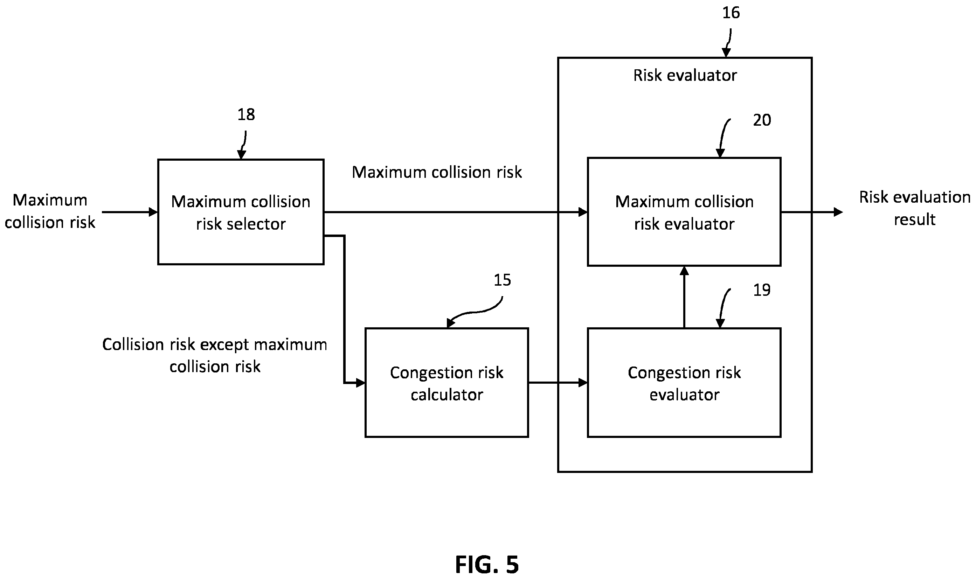

FIG. 5 is a diagram showing an example of the risk evaluator **16** and its related configuration in an embodiment of the navigation planning system of the present invention. The maximum collision risk selected by the maximum collision risk selector **18** is evaluated by comparing with a predetermined maximum collision risk threshold in a maximum collision risk evaluator **20** in the risk evaluator **16**.

On the other hand, the collision risk excluding the maximum collision risk is input to the congestion risk calculator **15** to calculate the congestion risk, which is evaluated by comparing with a predetermined congestion risk threshold in a congestion risk evaluator **19** of the risk evaluator **16**.

In this embodiment, the risk evaluator **16** determines that there is no collision risk if both the maximum collision risk and the congestion risk are equal to or less than the respective predetermined thresholds, and outputs the risk evaluation result.

On the other hand, when it exceeds the threshold, it is judged that there is a collision risk. However, when the maximum collision risk is below the threshold, it can be judged that the urgent collision risk is small even when the congestion risk is above the threshold.

As described above, the risk evaluator **16** may operate in conjunction with the congestion risk calculator **15** and acquires the congestion risk associated with the planned route **202**. The risk evaluator **16** further determines, based on the congestion risk associated with the planned route **202**, whether the own vessel **200** should avoid the planned route **202** or continue navigation along the planned route **202**. The potential collision risk may be determined by evaluating the congestion risk of the planned route **202**. If the congestion risk is high, the own vessel **200** will navigate a different route, such as the evasion route **212**, to avoid the planned route **202** and collision with the multiple obstacles **204** and **206**.

In this embodiment, when the risk evaluator **16** determines that the own vessel **200** needs to evade planned route **202** based on the congestion risk, the navigation planning system **100** prompts the vessel operator to navigate the own vessel **200** via evasion route **212** from the current location of the own vessel **200** or the predicted location where the own vessel will navigate in the future, i.e., the reference point (or waypoint) **214** that serves as the origin, as shown in **FIGs. 2 and 3**. This can be assumed by various means, such as an on-screen warning display or audio.

In this embodiment, when the own vessel **200** is traveling according to planned route **202**, the intended route to be traveled is the planned route **202**, but it will be apparent to those skilled in the art that the scope of the present invention is not limited thereto. As another embodiment, it may be envisioned that, without departing from the scope of the present invention, the route to be traveled when the own vessel **200** is traveling along the evasion route **212** will be the evasion route **212**.

As another embodiment, when the own vessel **200** is traveling along the evasion route **212**, the collision risk calculator **14** may determine, based on movable body and obstacle information, multiple collision risks associated with the multiple obstacles **204, 206** along the evasion route **212** (a route scheduled for evasion).

The congestion risk calculator **15** calculates congestion risk associated with evasion route 212 based on multiple collision risks. For example, as described above, the congestion risk calculator **15** calculates congestion risk associated with the evasion route **212** based on the logical sum of multiple collision risks associated with the multiple obstacles **204** and **206**. In this embodiment, the congestion risk calculator **15** determines congestion risk of the evasion route **212** based on the logical sum of multiple collision risks excluding maximum collision risk among the multiple collision risks.

The risk evaluator **16** determines, based on the congestion risk associated with the evasion route **212**, whether the own vessel **200** should deviate from evasion route **212** or continue on the evasion route **212**. The navigation planning system **100** repeats the process of avoiding collision with the plurality of obstacles **204** and **206** along the planned route traversed by the own vessel **200**, i.e., the planned route **202** or the evasion route **212**, and recalculates and reconfigures the evasion route when the risk of collision is high on the planned route.

Referring to **FIGs. 1, 2 and 3,** a navigation control unit **5** may be operatively connected to and communicate with the risk evaluator **16**. The navigation control unit **5** is configured to monitor and control the navigation of the own vessel **200** based on a determination of whether the own vessel **200** will deviate from the planned route **202**, the evasion route **212** configured to evade the obstacle and further evade, or continue navigation along the planned route **202** or the evasion route **212**.

The reason that the navigation control unit **5** may deviate from the evasion route **212** once configured to evade the obstacle and further evade it is because it can be assumed that while navigating the evasion route **212**, yet another obstacle will approach and must also be further evaded.

To control the navigation of the own vessel **200**, the navigation control unit **5** may control the position, direction of movement and speed of the own vessel **200**. Based on the determination that the own vessel **200** avoids the planned route **202** or the evasion route **212**, the navigation control unit **5** may also navigate the own vessel **200** along a route such as the evasion route **212** or the planned route **202,** or an evasion route other than the original evasion route **212.**

As an example, based on the actual direction of navigation of the own vessel **200,** the current direction of navigation of the own vessel **200** is along the planned route **202,** as shown in **FIG. 2.** In another example, based on the actual direction of navigation of the own vessel **200,** the current direction of navigation of the own vessel **200** is along the evasion route **212,** as shown in **FIG. 3.**

A display unit **6** is arranged on the own vessel **200** or electrically connected to the risk evaluator **16** mounted on the own vessel **200** as a vessel instrument for the purposes described below. The planned route **202** to be followed by the own vessel **200** is displayed on the display unit **6.**

When own vessel **200** deviates from planned route **202,** the display unit **6** displays the evasion route **212** to be navigated by the own vessel **200** to avoid collision with the plurality of obstacles **204** and **206.** Also, when the own vessel **200** deviates from the evasion route **212,** the display unit **6** displays another evacuation route to be navigated by the own vessel **200** to avoid collision with the plurality of obstacles **204** and **206.** Thus, the vessel operator can avoid collision with the plurality of obstacles **204** and **206** and safely navigate the own vessel **200.**

**FIG. 6** illustrates a determination of the collision risk associated with the obstacle **204** along the planned route according to an embodiment of the navigation planning system of the present invention. The collision risk calculator **14** calculates the collision risk for the obstacle **204** based on movable body information and obstacle information. Here, the collision risk of obstacle **204** is determined based on the position, moving the direction and speed of the own vessel **200** and the obstacle **204.**

The collision risk calculator **14** is further configured to determine the closest approach distance Dc between the own vessel **200** and the obstacle **204** and the closest approach distance Dx or Dy in a specific direction, or both, based on movable body information and obstacle information. In this embodiment, a closest approach distance Dc is the distance between the current position of the own vessel **200** and the closest approach point **302.** In the figure, a closest approach distance Dx in the vertical direction (For example, the direction of navigation as seen from the own vessel **200**) is the distance between the current position of the own vessel **200** and a closest approach point **304** in the vertical direction.

A closest approach distance Dy in the vertical direction (In this case, the direction of navigation of the ship is horizontal.) is the distance between the current position of the own vessel **200** and the closest approach point **306** in the horizontal direction. The collision risk calculator **14** calculates the closest approach distance Dc, Dx, and Dy when the own vessel **200** and the obstacle **204** approach from the positional relationship between the own vessel **200** and the obstacle **204,** the relative velocity between the own vessel **200** and the obstacle **204,** and the moving direction and the velocity between the own vessel **200** and the obstacle **204.**

The collision risk calculator **14** calculates the collision risk of the obstacle **204** based on at least one of the closest approach distance Dc between the own vessel **200** and the obstacle **204** and the closest approach distance Dx or Dy in a specific direction.

In this embodiment, when the closest approach distance Dc is less than a predetermined distance and the risk evaluator **16** determines that the collision risk is high, the own vessel **200** needs to avoid the obstacle **204.** In this case, the own vessel **200** deviates from the planned route **202** and travels along a different route, *i.e.,* the evasion route **212** to be set. On the other hand, when the closest approach distance Dc is greater than the predetermined distance, the risk evaluator **16** determines that the collision risk is low, and the own vessel **200** may continue to travel along the planned route **202.**

In another embodiment, when the closest approach distance Dx or Dy in a particular direction is less than the predetermined distance, and the risk evaluator **16** determines that the collision risk is high, the own vessel **200** must avoid the obstacle **204** by avoiding the planned route and traveling along a different route, *i.e.,* the evasion route. On the other hand, when the closest approach distances Dx and Dy in a particular direction are greater than the predetermined distance, the risk evaluator **16** determines that the collision risk is low, and in this case, the own vessel **200** may continue to travel along the planned route.

In the present embodiment, the collision risk may be calculated by specifying the positional relationship between the own vessel **200** and the obstacle **204** based on the closest approach distance Dx in the vertical direction and/or the closest approach distance Dy in the horizontal direction. Generally, the risk of collision between the own vessel **200** and the obstacle **204** increases when the obstacle **204** crosses in front of the own vessel **200.**

In this embodiment, the collision risk calculator **14** is further configured to determine the time Tc required for the own vessel **200** to cross the nearest distance Dc. Based on the nearest approach distance Dc and the time Tc required for the other vessel to reach the nearest approach distance **302, 204** the collision risk calculator **14** determines the collision risk of the obstacle **204** when the own vessel **200** is traveling from the origin (For example, the place of departure) of the planned route **202** to the destination. The time Tc required for the other vessel to reach the nearest approach distance **302** is calculated based on movable body information and obstacle information.

When the collision risk is calculated based on the nearest approach distance Dc between the own vessel **200** and the obstacle **204,** the collision risk increases even when the time until own vessel **200** approaches the obstacle **204** is very long. As a result, the own vessel **200** may have to deviate from the planned route to avoid collision with obstacle **204** after some time. Therefore, in this embodiment, the collision risk associated with the obstacle **204** is determined by considering the closest distance Dc between the own vessel **200** and the obstacle **204** and the time Tc required for the own vessel **200** to reach the closest point **302**.

As an example, the collision risk for the obstacle **204** is calculated and determined based on the following equation (1).

$$\text{Collision risk value} = \max (Dx, Dy) * RTc \qquad\qquad (1)$$

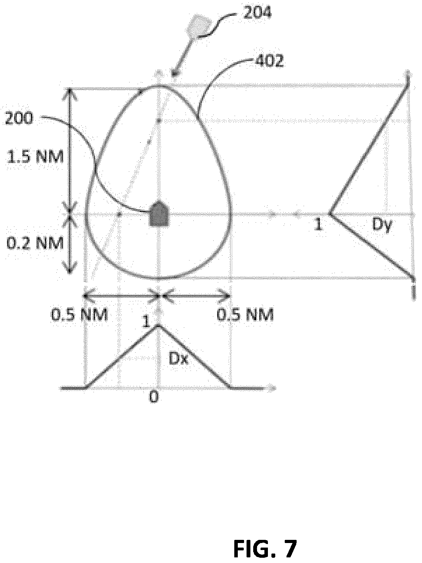

**FIG. 7** shows the determination of the collision risk when the own vessel **200** approaches the obstacle **204** according to an embodiment of the navigation planning system of the present invention. When the obstacle **204** approaches an oval area **402** centered on the own vessel **200,** the collision risk increases. Here, as an example, the oval area **402** is determined based on the area within 1.5NM (nominal mile) in front, 0.2NM in back, and 0.5NM on the side of the own vessel 200. As the distance between the own vessel **200** and the obstacle **204** decreases, the collision risk increases. Therefore, the collision risk is inversely proportional to the distance between the own vessel **200** and the obstacle **204.**

**FIG. 7** further illustrates the relationship between the collision risk and the vertical distance between the own vessel **200** and the obstacle **204,** and the relationship between the collision risk and the horizontal distance between the own vessel **200** and the obstacle **204.** As an example, **FIG. 7** shows the collision risk between the nearest neighbor distances Dx and Dy in the vertical and horizontal directions.

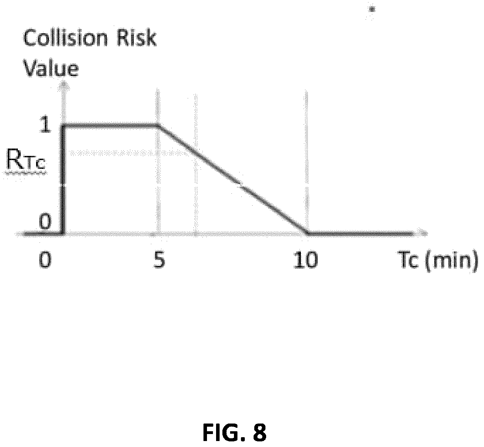

**FIG. 8** shows the relationship between the collision risk and a time Tc required for another vessel, which is an obstacle to the own vessel **200,** to reach the nearest neighbor **302.** When the time Tc is small, the collision risk increases. In the example shown here, when the time Tc is less than or equal to a predetermined time, the collision risk is high, and in this state, the maximum is determined to be 1.

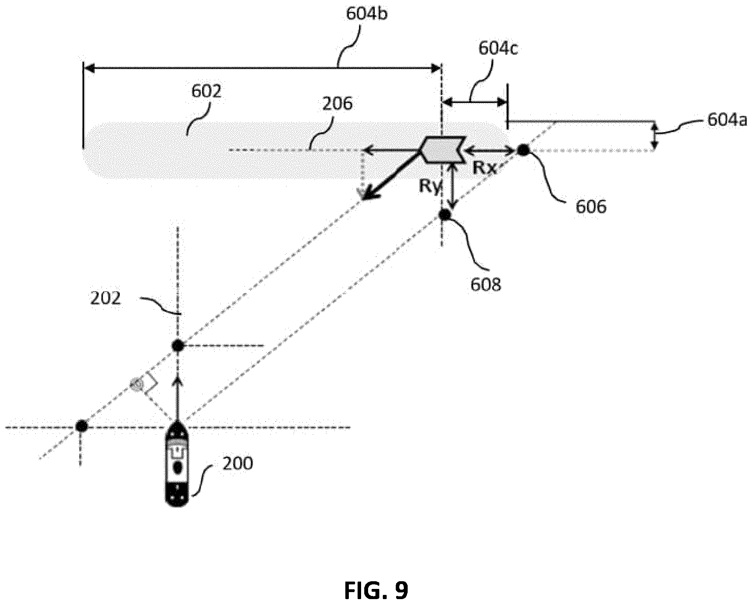

**FIG. 9** shows another embodiment of the navigation planning system of the present invention determining the collision risk when the own vessel **200** approaches the obstacle **204.** An obstacle bumper area **602** of obstacle **204** is determined based on the position, the moving direction, and the speed of the obstacle **204,** or vessel. The obstacle bumper area **602** of the obstacle **204** is located on the projected future path **206** of the obstacle **204** based on the direction of movement of the obstacle **204.**

The obstacle bumper area **602** of the obstacle **204** includes the surrounding areas of the obstacle **204** and the obstacle **204.** The obstacle bumper area **602** of the obstacle **204** may be determined based on the safe passage distances **604a, 604b,** and **604c,** which are the closest distances allowed on the side, front, and rear of the own vessel 200, respectively, to prevent collisions.

The obstacle bumper area **602** may also correspond to a restricted area, allowing simultaneous recognition of the direction of potential collisions and the distance between the own vessel **200** and the obstacle **204.** The closest approach point (relative to obstacle **204**) between own vessel **200** and the obstacle **204** in a vertical or horizontal direction **606 or 608** is determined based on the own vessel (movable body) information and the obstacle information. There is no risk of collision when the closest vertical or horizontal point **606 or 608** between the own vessel **200** and the obstacle **204** is outside the obstacle bumper area **602.** As shown in **FIG. 9,** in this embodiment, there is no risk of collision because neither the closest vertical point **606** at a distance of Rx from obstacle **204** nor the closest horizontal point **608** at a distance of Ry is present in the obstacle bumper area **602.**

In this embodiment, the collision risk calculator **14** calculates the time required for the own vessel **200** to penetrate into the obstacle bumper area **602** based on the relative speed between the own vessel **200** and the obstacle **204.** The collision risk calculator **14** further calculates collision risk of the obstacle **204** based on the time required for the own vessel **200** to penetrate into the obstacle bumper area **602.**

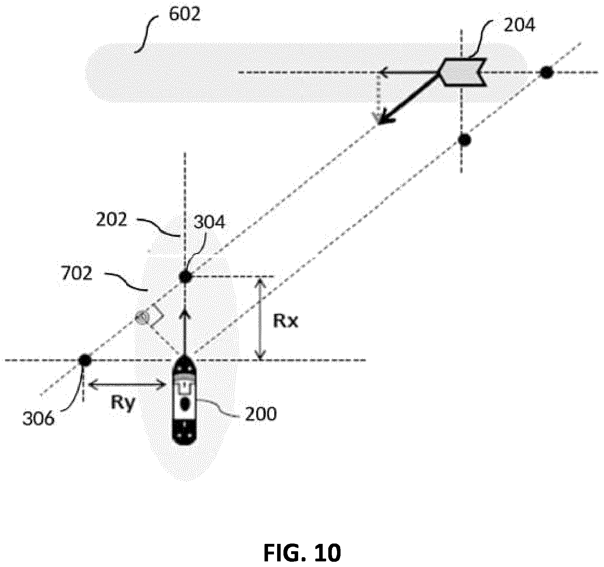

**FIG. 10** illustrates determination of collision risk when the own vessel **200** approaches the obstacle **204** according to yet another embodiment of the navigation planning system of the present invention. A movable body bumper area **702** of the own vessel **200** is determined based on location, direction of movement, and speed of the own vessel **200.** The movable body bumper area 702 of the own vessel **200** is located on the intended route (That is, the planned route **202** of this embodiment) of the own vessel **200** based on the direction of movement of the own vessel **200** and includes the own vessel **200** and the surrounding area.

The closest approach point **304** in the vertical direction or the closest approach point **306** in the horizontal direction between the own vessel **200** and the obstacle **204** to the own vessel **200** is calculated based on movable body information and obstacle information. If the closest contact point **304** in the vertical direction and the closest contact point **306** in the horizontal direction between the own vessel **200** and the obstacle **204** are outside the movable body bumper, then there is no risk of collision in the area **702.**

As shown in **FIG. 10,** in this embodiment, there is a risk of collision because the point closest to the vertical direction **304** at a distance Rx from the own vessel **200** is in the movable body bumper area **702.** There is a risk of collision if the own vessel **200** continues to navigate in the current direction along the planned route and enters the obstacle bumper area **602** of the obstacle **204.**

In this embodiment, the collision risk calculator**14** determines the time required for the movable body bumper area **702** to enter the obstacle bumper area **602** based on the relative speeds of the own vessel **200** and the obstacle **204** based on the respective speeds of the own vessel **200** and the obstacle **204** and the distance between them. The collision risk calculator **14** further calculates the collision risk associated with the obstacle **204** based on the time required for the movable body bumper area **702** to enter the obstacle bumper area **602.** The collision risk associated with the obstacle **204** may be determined in a manner like the determination of the collision risk associated with the obstacle **204** described in **FIGs. 6** through **10.**

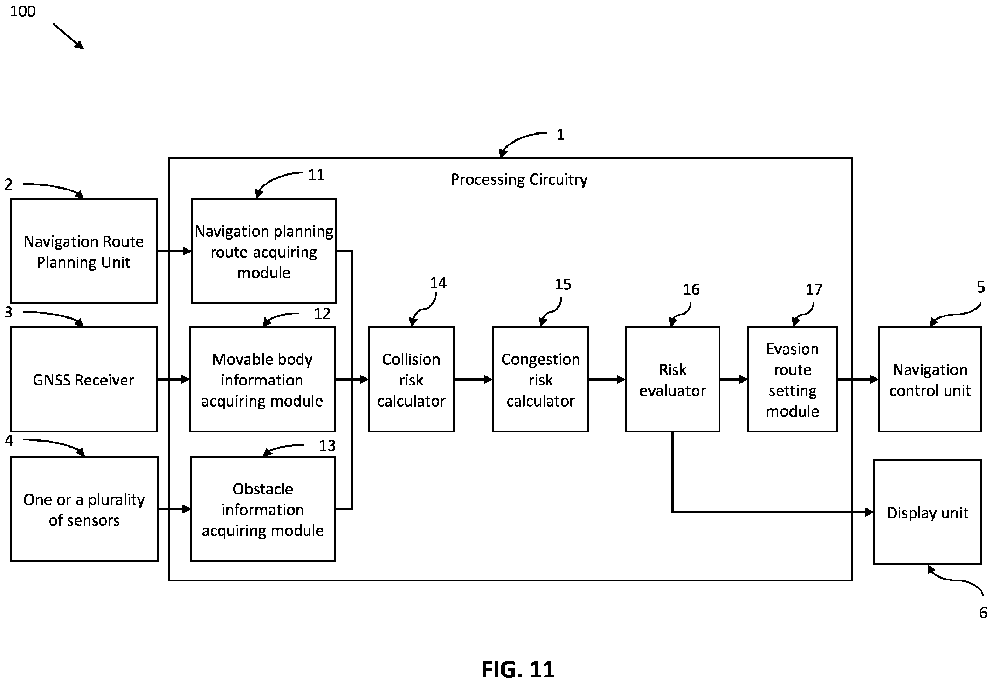

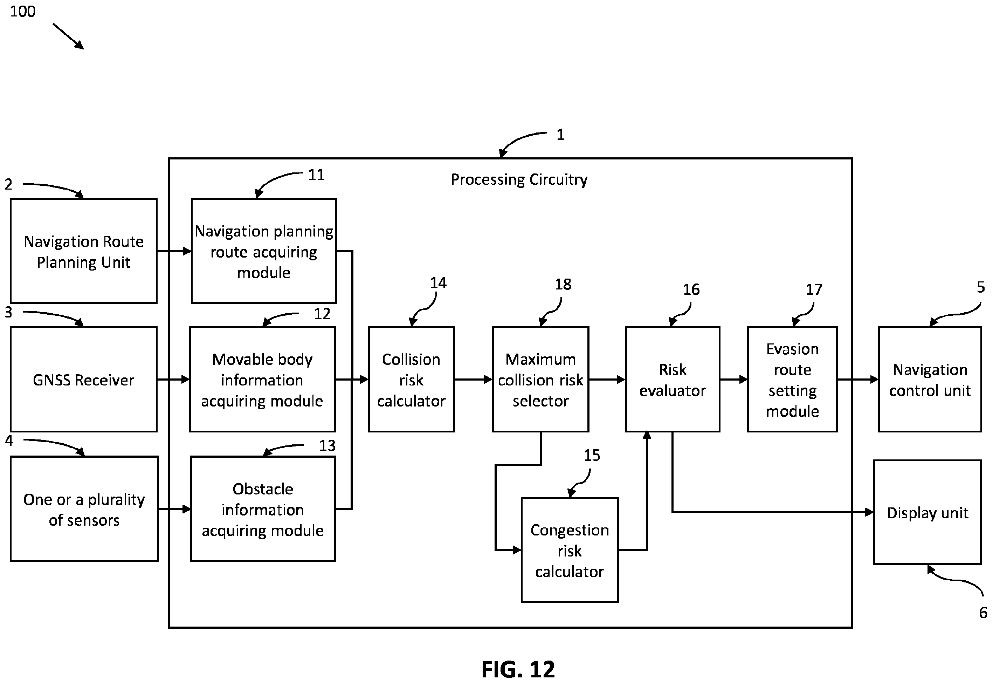

Both **FIGs. 11 and 12** are block diagrams illustrating the navigation planning system **100** for safely navigating the own vessel **200** according to another embodiment of the navigation planning system of the present invention. There is no difference except that the maximum collision risk is included in the embodiment shown in **FIG. 11** and the congestion risk is calculated excluding the maximum collision risk in the embodiment shown in **FIG. 12.** A difference from an embodiment of the navigation planning system of the present invention shown in **FIG. 1** is that the embodiment shown in **FIGs. 11 and 12** further includes an evasion route setting module **17** for generating an evasion route.

An embodiment of the navigation planning system **100** shown in **FIGs. 1 and 4** primarily evaluates the risk of collision with an obstacle and determines whether to avoid the aircraft. On the other hand, an embodiment of the navigation planning system **100** shown in **FIGs. 11 and 12** differs in that it generates an evasion route when it is determined that avoidance is necessary, evaluates the risk of collision of the evasion route, and makes a final decision. Hereinafter, an embodiment according to the configuration shown in **FIG. 12** will be described.

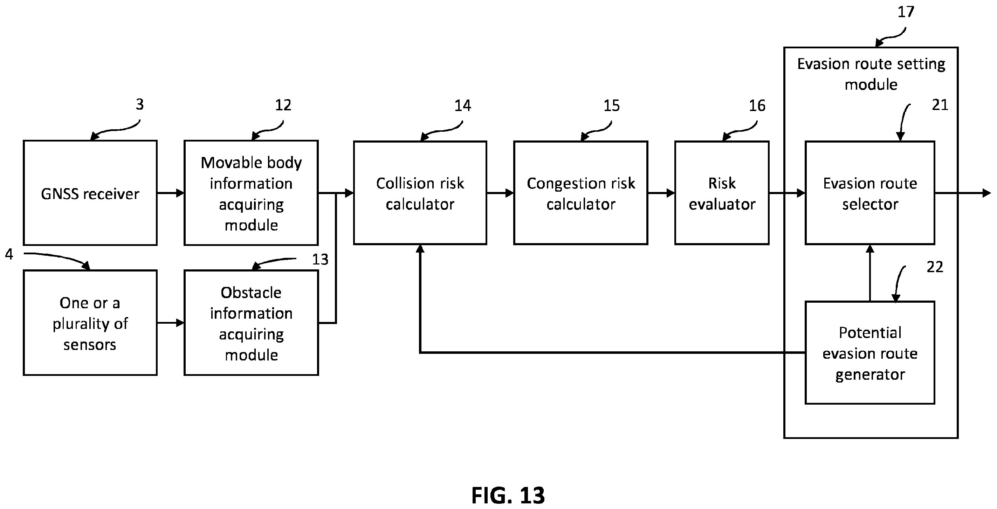

**FIG. 13** is a diagram showing an example of the configuration of an evasion route setting module **17** in the navigation planning system **100** of the present invention. In an embodiment of the navigation planning system of the present invention shown in **FIG. 13,** the evasion route setting module **17** includes a potential evasion route generator **22** and an evasion route selector **21.**

If the collision risk assessment determines that the own vessel **200** should navigate an evasion route out of the planned route, the potential evasion route generator **22** automatically generates one or more potential evasion routes.

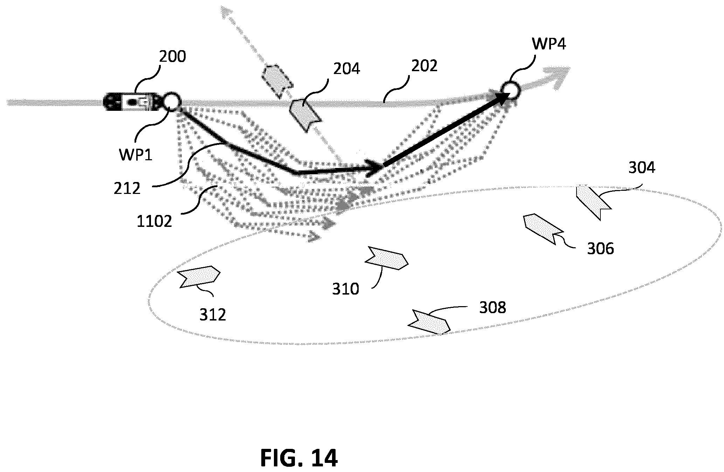

**FIG. 14** is a diagram showing an example of generating a potential evasion route in the navigation planning system of the present invention. The potential evasion route generator **22** automatically generates one or more route patterns connecting an evasion starting point WP1 on the planned route **202** to a return point WP4 on the planned route **202.** The route patterns may be stored in advance a plurality of nodes connecting the two points and a straight line or curve connecting them and may be superimposed on the evasion starting point WP1 and the return point WP4 to form a potential evasion route, or a curve may be generated by an appropriate function each time.

The positions of the evasion starting point WP1 and the return point WP4 may also be arbitrarily set for each potential evasion route when both points are on the planned route **202.** With regards to the evasion starting point WP1, for example, when the collision risk is high, the position where the own vessel is currently sailing may be appropriately set to the evasion starting point WP1. The position of the return point WP4 may be determined according to the distance setting policy of the evasion route as described later.

Referring to **FIG. 13,** the collision risk calculator **14** calculates the collision risk for each of the plurality of potential evasion routes generated by the potential evasion route generator **22.** As shown in **FIG. 14,** obstacles **204,302,304,306,308, 310,** and **312** having collision risk are captured in the vicinity of the own vessel.

First, the collision risk for the plurality of obstacles in the case of navigating the planned route 202 is calculated, and the maximum collision risk obstacle having the largest collision risk among the obstacles is selected, and the maximum collision risk and congestion risk are calculated. In this case, since the obstacle **204** is applicable and the collision risk is high, it is decided that the evasion route should be set.

Next, in the potential evasion route generator **22,** a plurality of potential evasion routes **1102** (patterns indicated by dashed lines) are generated, and a collision risk for the plurality of obstacles and a maximum collision risk obstacle having the largest collision risk are selected for each of them in the same manner as described above, and the maximum collision risk and congestion risk are calculated together. The risk evaluator **16** evaluates the risk for these, and the optimum evasion route **212** is selected.

Next, the collision risk evaluation when the own vessel **200** is traveling along the evasion route 212 outside the planned route **202** will be described.

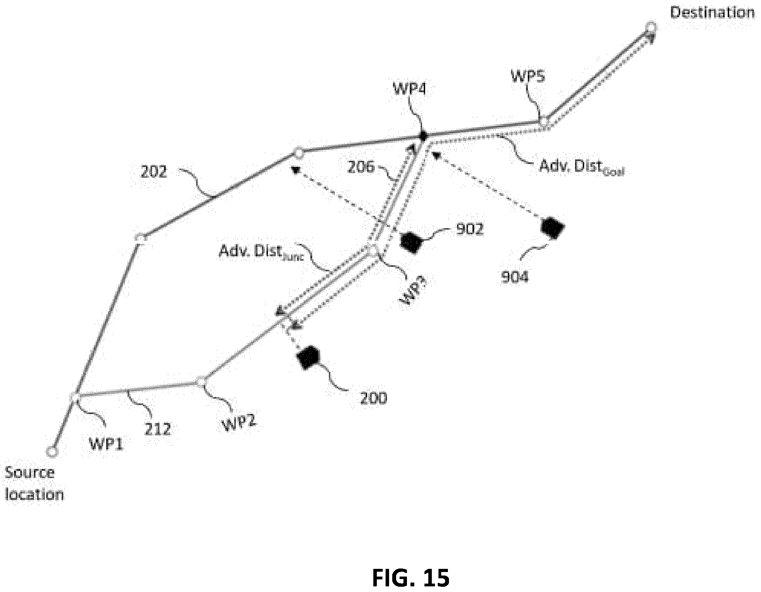

**FIG. 15** shows an area surrounding own vessel **200** when own vessel **200** is traveling along evasion route **212** in accordance with an embodiment of the present invention.

Referring again to **FIG. 11,** the navigation planning system **100** includes the processing circuitry **1,** the navigation route planning unit **2,** the GNSS receiver **3,** the one or a plurality of sensors **4,** the navigation control unit **5,** and the display unit **6.** The processing circuitry **1** includes the navigation planning route acquiring module **11,** the movable body information acquiring module **12,** the obstacle information acquiring module **13,** the collision risk calculator **14,** the congestion risk calculator **15,** the risk evaluator **16,** and the evolution route setting module **17.**

The navigation route planning unit **2,** the GNSS receiver **3,** the one or the plurality of sensors **4,** the navigation planning route acquiring module **11,** the movable body information acquiring module **12,** the obstacle information acquiring module **13,** the collision risk calculator **14,** and the risk evaluator **16** function in the same manner as described with reference to **FIG. 1.**

The evasion route setting module **17** is operationally connected to the risk evaluator **16** and can communicate. The evasion route setting module **17** generates the evasion route **212** of the own vessel **200.** The evasion route setting module **17** generates the evasion route **212** on behalf of the risk evaluator **16** as shown in **FIG. 1** using the current position **214** or the predicted position as the reference point of the own vessel **200.**

In **FIG. 15,** the predicted location of the own vessel **200** is either a predicted location on the current route, a predicted location on the planned route **202,** or a predicted location on the evasion route **212.** The evasion route setting module **17** may determine a predicted location based on the current speed and the turning angular velocity of own vessel **200.** In this embodiment, the evasion route setting module **17** generates the evasion route **212** based on the maximum collision risk calculated for the plurality of obstacles **204** and **206** and the congestion risk associated with the planned route **202,** or planned route.

When the maximum collision risk and congestion risk calculated for the plurality of obstacles associated with the planned route **202** are high, the evasion route setting module **17** generates the evasion route **212** of the own vessel **200** to avoid collisions with the plurality of the obstacles **204** and **206.** The generated evasion route **212** can start the evasion route from the evasion starting point (or waypoint) WP1 and return to the planned route **202** with a return point (or waypoint) WP4 to the planned route **202.** A vessel operator, *i.e.,* a user operating own vessel **200,** may navigate own vessel **200** along the generated evasion route **212** to avoid collisions with the multiple obstacles **902, 904.**

In another embodiment, the own vessel **200** travels the evasion route **212,** and the evasion route setting module **17** determines whether to replay evasion route **212** based on multiple obstacles such as obstacles **902, 904** along the evasion route **212.** In this embodiment, the planned route is the evasion route **212.**

When the evasion route is regenerated, the collision risk calculator **14** determines the current collision risk associated with the planned route based on multiple collision risks for multiple obstacles attempting to traverse or approach the planned route.

When the current collision risk associated with the planned route is high, the risk of collision between the own vessel **200** and multiple obstacles increases. The current collision risk may be indicated by a number between 0 and 1. The collision risk is not limited to the evaluation based on the above number, and the degree of risk may be set in an arbitrary range. In addition, the present collision risk indicates the degree of approach when the own vessel **200,** when navigating the planned route while maintaining the same speed, focuses on the most dangerous target among the surrounding targets.

Furthermore, the collision risk calculator **14** calculates the evasion collision risk associated with the generated evasion route based on the plurality of collision risks for the plurality of obstacles along the evasion route.

When the calculated evasion collision risk in the evasion route is high, the risk of collision between own vessel **200** and multiple obstacles is high. The evasion collision risk indicates the degree of danger due to the approach of the own vessel **200** when it is focused on the obstacle with the highest risk of collision among the surrounding obstacles when it is navigating the evasion route while maintaining the same speed. The evasion collision risk may be indicated by a number from 0 to 1, but it is not limited to the evaluation by the above number, and the risk of collision may be set in any range.

The congestion risk calculator **15** is further configured to calculate and determine the congestion risk for the planned route and the congestion risk for the evasion route. Here, the congestion risk indicates the degree to which a plurality of peripheral obstacles, except for the obstacle with the greatest risk of collision, approach simultaneously when the own vessel **200** is navigating the planned route while maintaining the same speed.

The congestion risk is calculated based on the respective collision risk for the plurality of obstacles and is calculated by the logical sum of them. The congestion risk for planned and evasion routes may be indicated by a number in the range of **0** to **1** and is indicated here by a number in the range of **0** to **1.** The method of setting the number and the range thereof may be arbitrarily set.

The congestion risk for planned routes is higher when the number of obstacles simultaneously approaching the own vessel **200** is large. When only one obstacle is approaching the own vessel **200,** in the example shown here, the maximum collision risk obstacle subject to the maximum collision risk is excluded, and the congestion risk is **0** when the congestion risk is calculated. When multiple obstacles (for example, other vessels) are approaching the own vessel 200, the number of both collision risk and congestion risk will be different.

For example, the collision risk and congestion risk in the case of multiple obstacles will be determined based on the following equations (2) and (3).

$$\text{Max} (a, b) = (\text{the greater of } a \text{ and } b) \qquad\qquad (2)$$

$$1 - \Pi_{(a, b)}(1 - (a, b)) = 1 - (1\text{-}a)\,(1\text{-}b) \tag{3}$$

In this embodiment, the collision risk can be calculated for each of the plurality of obstacles, and the plurality of obstacles are numbered 'N'. In this example, the collision risk of the plurality of obstacles is calculated by applying the following equations (2) to (4).

$$\text{Risk}_{\text{coll}} = \max_{i=1,\,N}(\text{Risk}i) \tag{4}$$

where N indicates the number of the obstacle.

In this embodiment, by applying the following equations (3) to (5), the congestion risk is determined based on the collision risk ki determined for each obstacle excluding the obstacle with the largest collision risk.

$$\text{Risk}_{\text{Cong}} = 1 - \Pi_{(i=1,\,N\text{-}1)}(1 - \text{Risk}i) \tag{3}$$

Referring to **FIG. 11,** the navigation control unit **5** is operatively connected to and can communicate with the evasion route setting module **17.** The navigation control unit **5** is configured to monitor and control the navigation of the own vessel **200** and, based on movable body and obstacle information, controls the own vessel **200** to navigate off the planned route **202** when it is determined that a collision must be avoided. This allows the vessel operator to avoid collisions with multiple obstacles when the collision risk is high and to safely navigate the own vessel **200** along the planned route or the evasion route.

In the present embodiment, the display unit **6** is external to the processing circuitry **1,** but it will be apparent to those skilled in the art that the navigation planning system **100** of the present invention is not limited thereto. In another embodiment, the display unit **6** is internal to the processing circuitry **1** without departing from the scope of the present invention.

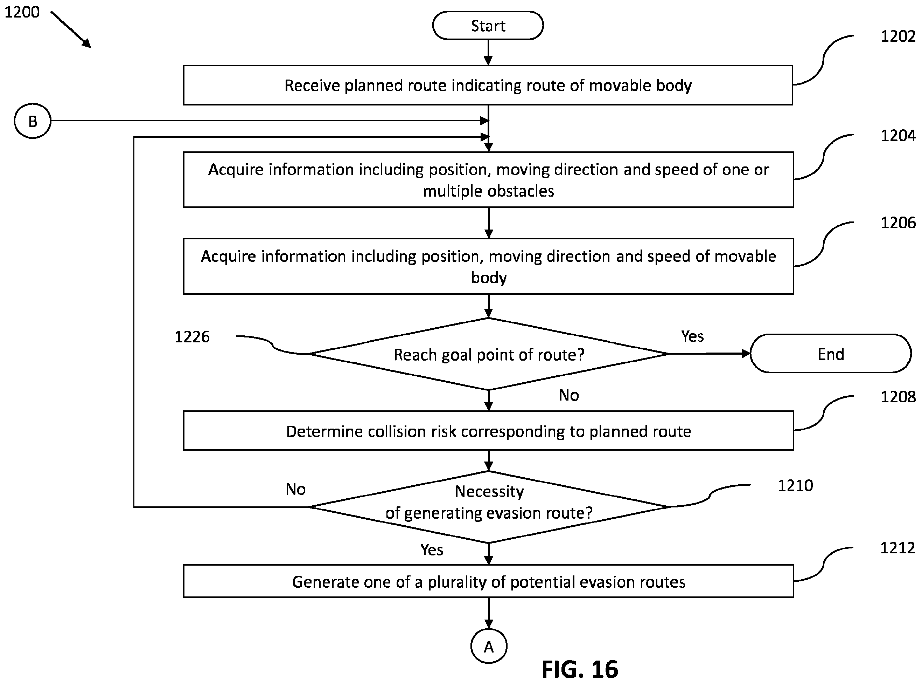

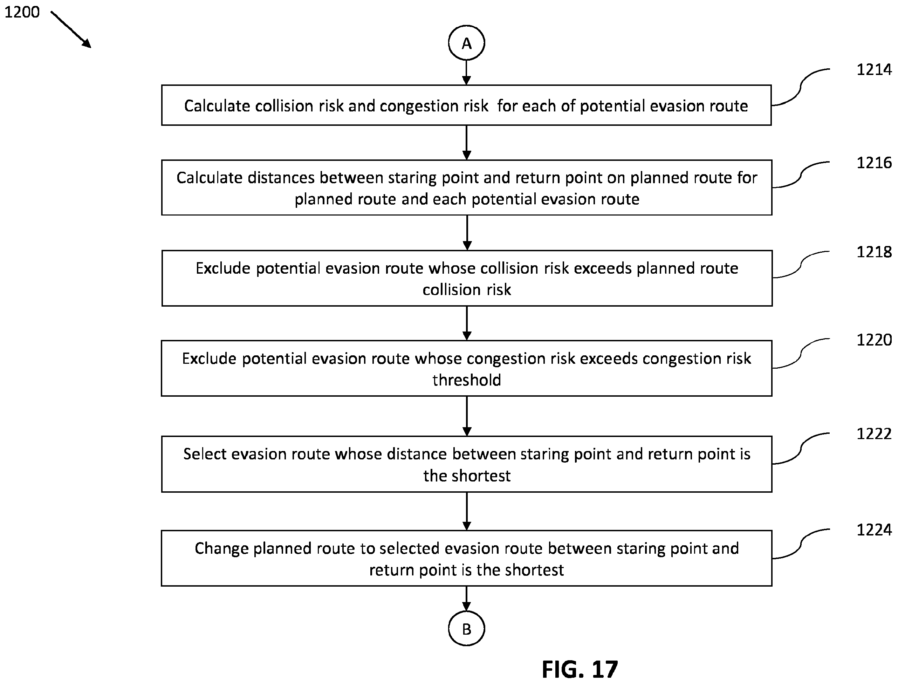

A route planning method **1200** according to an embodiment of the present invention will be described with appropriate reference to the flow charts shown in **FIGs. 16 and 17.**

In step **1202,** the navigation planning route acquiring module **11** receives the planned route **202,** which is the route of the own vessel **200.** The navigation route planning unit **2** may provide one or more routes for the navigation of the own vessel **200** from the place of departure to the destination.

In step **1204,** the obstacle information acquiring module **13** receives obstacle information from one or a plurality of sensors **4.** The obstacle information includes the position, movement direction, and speed of the plurality of obstacles **204, 206** (or **902** or **904**). The obstacle information may include one or more additional pieces of information related to other movable bodies, such as other vessels, currents, weather, reefs, stranded vessels, etc.

In step **1206,** the movable body information acquiring module **12** receives movable body information, such as the location, the moving direction, and the speed of the own vessel **200.**

In step **1208,** the collision risk calculator **14** determines a plurality of collision risks associated with the planned route of the own vessel **200** based on movable body information and obstacle information. In one embodiment, the route to be navigated is the planned route **202,** but in another embodiment, the route to be navigated may be evasion route **212.**

In step **1210,** if the risk evaluator **16** determines that navigation along the planned route is associated with a low collision risk, and the own vessel **200** determines that there is no need to evade the planned route and no need to generate an evasion route, step **1204** is performed.

In step **1210,** if the risk evaluator **16** determines that there is a high collision risk along the planned route and that there is a need to request the own vessel **200** and generate an evasion route to evade the planned route, step **1212** is performed.

In step **1212,** the evasion route setting module **17** generates the own vessel **200** evasion route and displays the evasion route on the screen of the display unit **6.** In step **1214,** the collision risk calculator **14** determines the plurality of collision risks associated with the plurality of obstacles along the planned route. The collision risk calculator **14** determines the collision risks for the planned route and the evasion route, respectively.

In step **1216,** the congestion risk calculator **15** calculates the congestion risk of the planned route, the congestion risk of the evasion route, and the distance to reach the confluence point of the own vessel (return point to the planned route), respectively.

In step **1218,** the risk evaluator **16** excludes the evasion route exceeding the congestion risk of the planned route from the candidates. In step **1220,** the evasion route exceeding the prescribed congestion risk is excluded from the candidates.

In step **1222,** the one with the shortest distance to reach the confluence is selected as the evasion route of the movable body (own vessel). Then, in step **1224,** the movable body (own vessel) navigates along the evasion route.

As described above, in the navigation planning system **100** of the present invention, the vessel operator, that is, the operator operating the own vessel, may safely navigate the own vessel **200** by avoiding collisions or conflicts with a plurality of surrounding obstacles such as other vessels or landforms that become obstacles in the planned route (planned route **202** or evasion route **212**) and the generated evasion route (evasion route **212** or other evasion route) displayed on the screen of the display unit **6.**

Description of Reference Characters

1 processing circuitry
2 navigation route planning unit
3 Global Navigation Satellite System (GNSS) receiver
4 one or a plurality of sensors
5 navigation control unit
6 display unit
11 navigation planning route acquiring module
12 movable body information acquiring module
13 obstacle information acquiring module
14 collision risk calculator
15 congestion risk calculator
16 risk evaluator
17 evasion route setting module
18 maximum collision risk selector
19 congestion risk evaluator
20 maximum collision risk evaluator
21 evasion route selector
22 potential evasion route generator
100 navigation planning system
200 movable body (own vessel)
202 planned route
204, 206, 902, 904 obstacle
212 evasion route
302, 304, 306, 308, 310, 312 congestion risk obstacle
1102 potential evasion route
WP1 (from planning route to evasion route) evasion starting point
WP4 (from evasion route to starting point) return point

Although the above is a description of embodiments of the navigation planning system and the route planning method of the present invention, various exemplary logical blocks and parts described in connection with the embodiments of the present invention may be implemented or executed by machines such as processors.

The processor may be a microprocessor, controller, microcontroller, state machine, or a combination thereof. The processor may include an electrical circuit configured to process executable instructions of the computer. In another embodiment, the processor may include an application-specific integrated circuit (ASIC), a field programmable gate array (FPGA), or other programmable device that performs logical operations without processing executable instructions of the computer.

The processor may also be implemented as a combination of computing devices, for example, a combination of a digital signal processor (DSP) and a microprocessor, a plurality of microprocessors, one or more microprocessors combined with a DSP core, or other such configuration.

Although primarily digital technology will be discussed herein, the processor may also include primarily analog components. For example, some or all of the signal processing algorithms described herein may be implemented by analog circuits or mixed analog and digital circuits.

The computing environment may include any type of computer system including, but not limited to, a microprocessor, mainframe computer, digital signal processor, portable computing device, device controller, or computer system based on a computing engine within the device.

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated" and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A navigation planning system (100), comprising: a navigation planning route acquiring module (11) configured to acquire a planned route that a movable body (200) moving on water should follow from a departure point to a destination;

   a movable body information acquiring module (12) configured to acquire movable body information including a position, a moving direction, and a speed of the movable body (200);
   an obstacle information acquiring module (13) configured to acquire obstacle information including each of a position, a moving direction, and a speed of a plurality of obstacles (204, 206) located in a surrounding area of the movable body (200);
   a collision risk calculator (14) configured to calculate a collision risk indicating a risk level of collision between the movable body and an obstacle of the plurality of obstacles based on the movable body information and the obstacle information;
   a congestion risk calculator (15) configured to calculate congestion risk indicating a degree of approaching the plurality of obstacles simultaneously based on each of the collision risk between the movable body and each of the plurality of obstacles;
   the system **characterised by**:
   a risk evaluator (16) configured to determine the necessity of evasion by comparing the congestion risk with a threshold value;
   a maximum collision risk selector (18) configured to select a maximum collision risk obstacle corresponding to a maximum collision risk among the plurality of obstacles,
   wherein the risk evaluator (16) further includes a maximum collision risk evaluator (20) configured to determine the necessity of evasion by comparing the maximum collision risk with a maximum collision risk threshold;
   an evasion route setting module (17) configured to set an evasion route different from the planned route for a part of or entire unnavigated route of the planned route when the risk evaluator (16) determines the necessity of the evasion route, and
   wherein the evasion route setting module (17) includes:

   a potential evasion route generator (22) configured to generate one or a plurality of potential evasion routes different from the planned route between an evasion starting point and a return point on the unnavigated route; and
   an evasion route selector (21) configured to select the evasion route from the plurality of potential evasion routes based on the maximum collision risk and the congestion risk for each of the potential evasion routes.

2. The navigation planning system (100) according to claim 1, wherein:
   the congestion risk calculator (15) is configured to calculate the congestion risk of the planned route based on a logical sum of the plurality of collision risks.

3. The navigation planning system (100) according to claim 2, wherein:
   the congestion risk calculator (15) is further configured to calculate the congestion risk based on the collision risks including the maximum collision risk from the plurality of collision risks.

4. The navigation planning system (100) according to any of claim 1 to 3, wherein:
the congestion risk calculator (15) is further configured to calculate the congestion risk for each of the potential evasion route based on the plurality of collision risks.

5. The navigation planning system (100) according to claim 4, wherein:

the collision risk calculator (14) is further configured to calculate the maximum collision risk for each of the one or more potential evasion routes, and
the congestion risk calculator (15) is further configured to calculate the congestion risk for each of the one or more potential evasion routes.

6. The navigation planning system (100) according to claim 5, wherein:

the collision risk calculator (14) is further configured to calculate the maximum collision risk for each of the potential evasion route when the movable body navigates the potential evasion route, and
the evasion route selector (21) is further configured to:
select an evasion route for which the maximum collision risk is equal to or less than the threshold.

7. The navigation planning system (100) according to claim 6, wherein:
the evasion route selector (21) is further configured to:
determine to allow to switch the planned route to the evasion route when the maximum collision risk corresponding to the selected evasion route is less than the maximum collision risk for the planned route.

8. The navigation planning system (100) according to claim 7, wherein:

the congestion risk calculator (15) is further configured to calculate the congestion risk of the evasion route when the movable body navigates the selected evasion route, and
the evasion route selector (21) is further configured to determine to allow to switch the planned route to the evasion route when the congestion risk corresponding to the selected evasion route is less than the congestion risk for the planned route.

9. The navigation planning system (100) according to claim 8, wherein:
the evasion route selector (21) is further configured to select the evasion route in which the distance traveled by the movable body is minimized among the plurality of potential evasion routes in which the maximum collision risk and the congestion risk value are both equal to or less than a predetermined threshold.

10. A navigation route planning method, comprising:

acquiring a planned route that a movable body (200) moving on water should follow from a departure point to a destination;
acquiring movable body information including a position, a moving direction, and a speed of a movable body on water;
acquiring obstacle information including each of a position, a moving direction, and a speed of a plurality of obstacles (204, 206) located in a surrounding area of the movable body;
calculating a collision risk indicating a risk level of collision between the movable body and each obstacle of the plurality of obstacles based on the movable body information and the obstacle information;
calculating congestion risk indicating a degree of approaching the plurality of obstacles simultaneously based on the collision risk between the movable body and each of the plurality of obstacles;
the method **characterised by**:

determining necessity of evasion by comparing the congestion risk with a threshold value;
selecting a maximum collision risk obstacle corresponding to a maximum collision risk among the plurality of obstacles,
determining necessity of evasion by comparing the maximum collision risk with a maximum collision risk threshold;
setting an evasion route different from the navigation planning route for a part of or entire unnavigated route of the planned route when the necessity of the evasion route is determined,
wherein setting the evasion route includes:

generating one or a plurality of potential evasion routes different from the planned route between an evasion starting point and a return point on the unnavigated route; and
selecting the evasion route from the plurality of potential evasion routes based on the maximum collision risk and the congestion risk for each of the potential evasion routes.

**11.** The navigation route planning method according to claim 10, further comprising:

calculating the maximum collision risk for each of the one or more potential evasion routes and the congestion risk the congestion risk for each of the one or more potential evasion routes; and
determining the evasion route based on the calculated maximum collision risk and congestion risk.

**12.** The navigation planning method according to claim 11, further comprising:
selecting the evasion route in which the distance traveled by the movable body is minimized among the plurality of potential evasion routes in which the maximum collision risk and the congestion risk value are both equal to or less than a predetermined threshold.

**Patentansprüche**

**1.** Navigationsplanungssystem (100), aufweisend:

ein Navigationsplanungsroutenerfassungsmodul (11), das konfiguriert ist, um eine geplante Route zu erfassen, der ein sich auf Wasser bewegender beweglicher Körper (200) von einem Ausgangspunkt zu einem Ziel folgen sollte;
ein Bewegliches-Körper-Informationserfassungsmodul (12), das konfiguriert ist, um Bewegliche-Körper-Informationen einschließlich einer Position, einer Bewegungsrichtung und einer Geschwindigkeit des beweglichen Körpers (200) zu erfassen;
ein Hindernisinformationserfassungsmodul (13), das konfiguriert ist, um Hindernisinformationen einschließlich jeder von einer Position, einer Bewegungsrichtung und einer Geschwindigkeit einer Vielzahl von Hindernissen (204, 206), die sich in einem Umgebungsbereich des beweglichen Körpers (200) befinden, zu erfassen;
einen Kollisionsrisikorechner (14), der konfiguriert ist, um ein Kollisionsrisiko zu berechnen, das ein Risikoniveau einer Kollision zwischen dem beweglichen Körper und einem Hindernis der Vielzahl von Hindernissen basierend auf den Bewegliche-Körper-Informationen und den Hindernisinformationen angibt;
einen Staurisikorechner (15), der konfiguriert ist, um ein Staurisiko zu berechnen, das einen Grad einer gleichzeitigen Annäherung der Vielzahl von Hindernissen basierend auf jedem von dem Kollisionsrisiko zwischen dem beweglichen Körper und jedem der Vielzahl von Hindernissen angibt;
wobei das System **gekennzeichnet ist durch**:

einen Risikoauswerter (16), der konfiguriert ist, um die Notwendigkeit eines Ausweichens durch Vergleichen des Staurisikos mit einem Schwellenwert zu bestimmen;
eine Maximum-Kollisionsrisikoauswahleinrichtung (18), die konfiguriert ist, um ein Maximum-Kollisionsrisikohindernis, das einem Maximum-Kollisionsrisiko entspricht, aus der Vielzahl von Hindernissen auszuwählen,
wobei der Risikoauswerter (16) ferner einen Maximum-Kollisionsrisikoauswerter (20) umfasst, der konfiguriert ist, um die Notwendigkeit eines Ausweichens **durch** Vergleichen des Maximum-Kollisionsrisikos mit einem Maximum-Kollisionsrisikoschwellenwert zu bestimmen;
ein Ausweichrouteneinstellmodul (17), das konfiguriert ist, um eine Ausweichroute, die sich von der geplanten Route unterscheidet, für einen Teil oder die gesamte nicht navigierte Route der geplanten Route einzustellen, wenn der Risikoauswerter (16) die Notwendigkeit der Ausweichroute bestimmt, und
wobei das Ausweichrouteneinstellmodul (17) umfasst:

einen Potentieller-Ausweichroutengenerator (22), der konfiguriert ist, um eine oder eine Vielzahl von potentiellen Ausweichrouten, die sich von der geplanten Route unterscheiden, zwischen einem Ausweichstartpunkt und einem Rückkehrpunkt auf der nicht navigierten Route zu erzeugen; und
eine Ausweichroutenauswahleinrichtung (21), die konfiguriert ist, um die Ausweichroute aus der Vielzahl von potentiellen Ausweichrouten basierend auf dem Maximum-Kollisionsrisiko und dem Staurisiko für jede der potentiellen Ausweichrouten auszuwählen.

**2.** Navigationsplanungssystem (100) nach Anspruch 1, wobei:
der Staurisikorechner (15) konfiguriert ist, um das Staurisiko der geplanten Route basierend auf einer logischen Summe der Vielzahl von Kollisionsrisiken zu berechnen.

**3.** Navigationsplanungssystem (100) nach Anspruch 2, wobei:
der Staurisikorechner (15) ferner konfiguriert ist, um das Staurisiko basierend auf den Kollisionsrisiken einschließlich des Maximum-Kollisionsrisikos aus der Vielzahl von Kollisionsrisiken zu berechnen.

**4.** Navigationsplanungssystem (100) nach einem der Ansprüche 1 bis 3, wobei:
der Staurisikorechner (15) ferner konfiguriert ist, um das Staurisiko für jede der potentiellen Ausweichrouten basierend auf der Vielzahl von Kollisionsrisiken zu berechnen.

**5.** Navigationsplanungssystem (100) nach Anspruch 4, wobei:

der Kollisionsrisikorechner (14) ferner konfiguriert ist, um das Maximum-Kollisionsrisiko für jede der einen oder mehreren potentiellen Ausweichrouten zu berechnen, und
der Staurisikorechner (15) ferner konfiguriert ist, um das Staurisiko für jede der einen oder mehreren potentiellen Ausweichrouten zu berechnen.

**6.** Navigationsplanungssystem (100) nach Anspruch 5, wobei:

der Kollisionsrisikorechner (14) ferner konfiguriert ist, um das Maximum-Kollisionsrisiko für jede der potentiellen Ausweichrouten zu berechnen, wenn der bewegliche Körper die potentielle Ausweichroute navigiert, und
die Ausweichroutenauswahleinrichtung (21) ferner konfiguriert ist, um:
eine Ausweichroute auszuwählen, für die das Maximum-Kollisionsrisiko gleich oder kleiner als der Schwellenwert ist.

**7.** Navigationsplanungssystem (100) nach Anspruch 6, wobei:
die Ausweichroutenauswahleinrichtung (21) ferner konfiguriert ist, um:
zu bestimmen, zu erlauben, die geplante Route auf die Ausweichroute umzuschalten, wenn das Maximum-Kollisionsrisiko, das der ausgewählten Ausweichroute entspricht, kleiner als das Maximum-Kollisionsrisiko für die geplante Route ist.

**8.** Navigationsplanungssystem (100) nach Anspruch 7, wobei:

der Staurisikorechner (15) ferner konfiguriert ist, um das Staurisiko der Ausweichroute zu berechnen, wenn der bewegliche Körper die ausgewählte Ausweichroute navigiert, und
die Ausweichroutenauswahleinrichtung (21) ferner konfiguriert ist, um zu bestimmen, zu erlauben, die geplante Route auf die Ausweichroute umzuschalten, wenn das Staurisiko, das der ausgewählten Ausweichroute entspricht, kleiner als das Staurisiko für die geplante Route ist.

**9.** Navigationsplanungssystem (100) nach Anspruch 8, wobei:
die Ausweichroutenauswahleinrichtung (21) ferner konfiguriert ist, um die Ausweichroute, in der die von dem beweglichen Körper zurückgelegte Distanz minimiert ist, aus der Vielzahl von potentiellen Ausweichrouten auszuwählen, in denen das Maximum-Kollisionsrisiko und der Staurisikowert beide gleich oder kleiner als ein vorbestimmter Schwellenwert sind.

**10.** Navigationsroutenplanungsverfahren, aufweisend:

Erfassen einer geplanten Route, der ein sich auf Wasser bewegender beweglicher Körper (200) von einem Ausgangspunkt zu einem Ziel folgen sollte;
Erfassen von Bewegliche-Körper-Informationen einschließlich einer Position, einer Bewegungsrichtung und einer Geschwindigkeit eines beweglichen Körpers auf Wasser;
Erfassen von Hindernisinformationen einschließlich jeder von einer Position, einer Bewegungsrichtung und einer Geschwindigkeit einer Vielzahl von Hindernissen (204, 206), die sich in einem Umgebungsbereich des beweglichen Körpers befinden;
Berechnen eines Kollisionsrisikos, das ein Risikoniveau einer Kollision zwischen dem beweglichen Körper und jedem Hindernis der Vielzahl von Hindernissen basierend auf den Bewegliche-Körper-Informationen und den Hindernisinformationen angibt;

Berechnen eines Staurisikos, das einen Grad einer gleichzeitigen Annäherung der Vielzahl von Hindernissen basierend auf dem Kollisionsrisiko zwischen dem beweglichen Körper und jedem der Vielzahl von Hindernissen angibt;

wobei das Verfahren **gekennzeichnet ist durch**:

Bestimmen der Notwendigkeit eines Ausweichens **durch** Vergleichen des Staurisikos mit einem Schwellenwert;

Auswählen eines Maximum-Kollisionsrisikohindernisses, das einem Maximum-Kollisionsrisiko entspricht, aus der Vielzahl von Hindernissen,

Bestimmen der Notwendigkeit eines Ausweichens **durch** Vergleichen des Maximum-Kollisionsrisikos mit einem Maximum-Kollisionsrisikoschwellenwert;

Einstellen einer Ausweichroute, die sich von der Navigationsplanungsroute unterscheidet, für einen Teil oder die gesamte nicht navigierte Route der geplanten Route, wenn die Notwendigkeit der Ausweichroute bestimmt wird,

wobei das Einstellen der Ausweichroute umfasst:

Erzeugen einer oder einer Vielzahl von potentiellen Ausweichrouten, die sich von der geplanten Route unterscheiden, zwischen einem Ausweichstartpunkt und einem Rückkehrpunkt auf der nicht navigierten Route; und

Auswählen der Ausweichroute aus der Vielzahl von potentiellen Ausweichrouten basierend auf dem Maximum-Kollisionsrisiko und dem Staurisiko für jede der potentiellen Ausweichrouten.

11. Navigationsroutenplanungsverfahren nach Anspruch 10, ferner aufweisend:

Berechnen des Maximum-Kollisionsrisikos für jede der einen oder mehreren potentiellen Ausweichrouten und des Staurisikos für jede der einen oder mehreren potentiellen Ausweichrouten; und

Bestimmen der Ausweichroute basierend auf dem berechneten Maximum-Kollisionsrisiko und Staurisiko.

12. Navigationsplanungsverfahren nach Anspruch 11, ferner aufweisend:

Auswählen der Ausweichroute, in der die von dem beweglichen Körper zurückgelegte Distanz minimiert ist, aus der Vielzahl von potentiellen Ausweichrouten, in denen das Maximum-Kollisionsrisiko und der Staurisikowert beide gleich oder kleiner als ein vorbestimmter Schwellenwert sind.

**Revendications**

1. Système de planification de navigation (100), comprenant : un module d'acquisition d'itinéraire de planification de navigation (11) configuré pour acquérir un itinéraire planifié qu'un corps mobile (200) se déplaçant sur l'eau doit suivre d'un point de départ à une destination ;

un module d'acquisition d'informations de corps mobile (12) configuré pour acquérir des informations de corps mobile incluant une position, une direction de déplacement et une vitesse du corps mobile (200) ;

un module d'acquisition d'informations d'obstacle (13) configuré pour acquérir des informations d'obstacle incluant chacune parmi une position, une direction de déplacement et une vitesse d'une pluralité d'obstacles (204, 206) situés dans une zone environnante du corps mobile (200) ;

un calculateur de risque de collision (14) configuré pour calculer un risque de collision indiquant un niveau de risque de collision entre le corps mobile et un obstacle de la pluralité d'obstacles sur la base des informations de corps mobile et des informations d'obstacle ;

un calculateur de risque d'encombrement (15) configuré pour calculer un risque d'encombrement indiquant un degré d'approche de la pluralité d'obstacles simultanément sur la base de chacun du risque de collision entre le corps mobile et chacun de la pluralité d'obstacles ; le système étant **caractérisé par** :

un évaluateur de risque (16) configuré pour déterminer la nécessité d'évitement en comparant le risque d'encombrement à une valeur seuil ;

un sélecteur de risque de collision maximal (18) configuré pour sélectionner un obstacle à risque de collision maximal correspondant à un risque de collision maximal parmi la pluralité d'obstacles,

dans lequel l'évaluateur de risque (16) inclut en outre un évaluateur de risque de collision maximal (20) configuré pour déterminer la nécessité d'évitement en comparant le risque de collision maximal à un seuil de risque de collision maximal ;

un module de définition d'itinéraire d'évitement (17) configuré pour définir un itinéraire d'évitement différent de l'itinéraire planifié pour une partie ou la totalité de l'itinéraire non parcouru de l'itinéraire planifié lorsque l'évaluateur de risques (16) détermine la nécessité de l'itinéraire d'évitement, et

dans lequel le module de définition d'itinéraire d'évitement (17) comporte :

un générateur d'itinéraire d'évitement potentiel (22) configuré pour générer un ou une pluralité d'itinéraires d'évitement potentiels différents de l'itinéraire planifié entre un point de départ d'évitement et un point de retour sur l'itinéraire non parcouru ; et

un sélecteur d'itinéraire d'évitement (21) configuré pour sélectionner l'itinéraire d'évitement parmi la pluralité d'itinéraires d'évitement potentiels sur la base du risque de collision maximal et du risque d'encombrement pour chacun des itinéraires d'évitement potentiels.

2. Système de planification de navigation (100) selon la revendication 1, dans lequel :
le calculateur de risque d'encombrement (15) est configuré pour calculer le risque d'encombrement de l'itinéraire planifié sur la base d'une somme logique de la pluralité de risques de collision.

3. Système de planification de navigation (100) selon la revendication 2, dans lequel :
le calculateur de risque d'encombrement (15) est en outre configuré pour calculer le risque d'encombrement sur la base des risques de collision incluant le risque de collision maximal parmi la pluralité de risques de collision.

4. Système de planification de navigation (100) selon l'une des revendications 1 à 3, dans lequel :
le calculateur de risque d'encombrement (15) est en outre configuré pour calculer le risque d'encombrement pour chacun des itinéraires d'évitement potentiels sur la base de la pluralité de risques de collision.

5. Système de planification de navigation (100) selon la revendication 4, dans lequel :

le calculateur de risque de collision (14) est en outre configuré pour calculer le risque de collision maximal pour chacun des un ou plusieurs itinéraires d'évitement potentiels, et

le calculateur de risque d'encombrement (15) est en outre configuré pour calculer le risque d'encombrement pour chacun des un ou plusieurs itinéraires d'évitement potentiels.

6. Système de planification de navigation (100) selon la revendication 5, dans lequel :

le calculateur de risque de collision (14) est en outre configuré pour calculer le risque de collision maximal pour chacun des itinéraires d'évitement potentiels lorsque le corps mobile navigue sur l'itinéraire d'évitement potentiel, et

le sélecteur d'itinéraire d'évitement (21) est en outre configuré pour :

sélectionner un itinéraire d'évitement pour lequel le risque de collision maximal est inférieur ou égal au seuil.

7. Système de planification de navigation (100) selon la revendication 6, dans lequel :
le sélecteur d'itinéraire d'évitement (21) est en outre configuré pour :
déterminer qu'il faut permettre le basculement de l'itinéraire planifié vers l'itinéraire d'évitement lorsque le risque de collision maximal correspondant à l'itinéraire d'évitement sélectionné est inférieur au risque de collision maximal pour l'itinéraire planifié.

8. Système de planification de navigation (100) selon la revendication 7, dans lequel :

le calculateur de risque d'encombrement (15) est en outre configuré pour calculer le risque d'encombrement de l'itinéraire d'évitement lorsque le corps mobile navigue sur l'itinéraire d'évitement sélectionné, et

le sélecteur d'itinéraire d'évitement (21) est en outre configuré pour déterminer qu'il faut permettre le basculement de l'itinéraire planifié vers l'itinéraire d'évitement lorsque le risque d'encombrement correspondant à l'itinéraire d'évitement sélectionné est inférieur au risque d'encombrement pour l'itinéraire planifié.

9. Système de planification de navigation (100) selon la revendication 8, dans lequel :
le sélecteur d'itinéraire d'évitement (21) est en outre configuré pour sélectionner l'itinéraire d'évitement dans lequel la distance parcourue par le corps mobile est minimisée parmi la pluralité d'itinéraires d'évitement potentiels dans lesquels le risque de collision maximal et la valeur de risque d'encombrement sont tous deux égaux ou inférieurs à un seuil prédéterminé.

10. Procédé de planification d'itinéraire de navigation, comprenant :

acquérir un itinéraire planifié qu'un corps mobile (200) se déplaçant sur l'eau doit suivre d'un point de départ à une destination ;
acquérir des informations de corps mobile incluant une position, une direction de déplacement et une vitesse d'un corps mobile sur l'eau ;
acquérir des informations d'obstacle incluant chacune parmi une position, une direction de déplacement et une vitesse d'une pluralité d'obstacles (204, 206) situés dans une zone environnante du corps mobile ;
calculer un risque de collision indiquant un niveau de risque de collision entre le corps mobile et chaque obstacle de la pluralité d'obstacles sur la base des informations de corps mobile et des informations d'obstacle ;
calculer un risque d'encombrement indiquant un degré d'approche de la pluralité d'obstacles simultanément sur la base du risque de collision entre le corps mobile et chacun de la pluralité d'obstacles ; le procédé étant **caractérisé par** :
déterminer la nécessité d'évitement en comparant le risque d'encombrement à une valeur seuil ;
sélectionner un obstacle à risque de collision maximal correspondant à un risque de collision maximal parmi la pluralité d'obstacles,
déterminer la nécessité d'évitement en comparant le risque de collision maximal à un seuil de risque de collision maximal ;
définir un itinéraire d'évitement différent de l'itinéraire de planification de navigation pour une partie ou la totalité de l'itinéraire non parcouru de l'itinéraire planifié lorsque la nécessité de l'itinéraire d'évitement est déterminée, dans lequel définir l'itinéraire d'évitement comporte :

générer un ou une pluralité d'itinéraires d'évitement potentiels différents de l'itinéraire planifié entre un point de départ d'évitement et un point de retour sur l'itinéraire non parcouru ; et
sélectionner l'itinéraire d'évitement parmi la pluralité d'itinéraires d'évitement potentiels sur la base du risque de collision maximal et du risque d'encombrement pour chacun des itinéraires d'évitement potentiels.

11. Procédé de planification d'itinéraire de navigation selon la revendication 10, comprenant en outre :

calculer le risque de collision maximal pour chacun des un ou plusieurs itinéraires d'évitement potentiels et le risque d'encombrement pour chacun des un ou plusieurs itinéraires d'évitement potentiels ; et
déterminer l'itinéraire d'évitement sur la base du risque de collision maximal et du risque d'encombrement calculés.

12. Procédé de planification de navigation selon la revendication 11, comprenant en outre :
sélectionner l'itinéraire d'évitement dans lequel la distance parcourue par le corps mobile est minimisée parmi la pluralité d'itinéraires d'évitement potentiels dans lesquels le risque de collision maximal et la valeur de risque d'encombrement sont tous deux égaux ou inférieurs à un seuil prédéterminé.

EP 4 560 264 B1

100

1

Processing Circuitry

2

Navigation Route Planning Unit

11

Navigation planning route acquiring module

3

GNSS Receiver

12

Movable body information acquiring module

4

One or a plurality of sensors

13

Obstacle information acquiring module

14

Collision risk calculator

15

Congestion risk calculator

16

Risk evaluator

5

Navigation control unit

Display unit

6

**FIG. 1**

FIG. 2

FIG. 3

FIG. 4

100

Processing Circuitry — 1

Navigation Route Planning Unit — 2 → Navigation planning route acquiring module — 11

GNSS Receiver — 3 → Movable body information acquiring module — 12

One or a plurality of sensors — 4 → Obstacle information acquiring module — 13

Collision risk calculator — 14

Maximum Collision Risk Selector — 18

Congestion risk calculator — 15

Risk evaluator — 16

Navigation control unit — 5

Display unit — 6

**FIG. 5**

EP 4 560 264 B1

FIG. 6

FIG. 7

**FIG. 8**

**FIG. 9**

EP 4 560 264 B1

FIG. 10

**FIG. 11**

**FIG. 12**

**FIG. 13**

FIG. 14

FIG. 15

EP 4 560 264 B1

1200

Start

Receive planned route indicating route of movable body — 1202

B

Acquire information including position, moving direction and speed of one or multiple obstacles — 1204

Acquire information including position, moving direction and speed of movable body — 1206

1226 — Reach goal point of route? — Yes → End

No

Determine collision risk corresponding to planned route — 1208

No — Necessity of generating evasion route? — 1210

Yes

Generate one of a plurality of potential evasion routes — 1212

A

**FIG. 16**

1200

(A)

Calculate collision risk and congestion risk for each of potential evasion route — 1214

Calculate distances between staring point and return point on planned route for planned route and each potential evasion route — 1216

Exclude potential evasion route whose collision risk exceeds planned route collision risk — 1218

Exclude potential evasion route whose congestion risk exceeds congestion risk threshold — 1220

Select evasion route whose distance between staring point and return point is the shortest — 1222

Change planned route to selected evasion route between staring point and return point is the shortest — 1224

(B)

**FIG. 17**

EP 4 560 264 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200310434 A1

- WO 2021149448 A1